Europäisches Patentamt

European Patent Office

Office européen des brevets

(19)

(11) Veröffentlichungsnummer: **0 226 921**
**B1**

(12) **EUROPÄISCHE PATENTSCHRIFT**

(45) Veröffentlichungstag der Patentschrift: **10.10.90**

(21) Anmeldenummer: **86117007.4**

(22) Anmeldetag: **08.12.86**

(51) Int. Cl.⁵: **B 65 D 77/20,** B 65 D 65/40,
B 65 D 75/30, B 65 D 75/64,
B 32 B 27/32, B 32 B 7/06

(54) Leicht aufreissbare, sterilisierbare Packungen.

(30) Priorität: **21.12.85 DE 3545768**

(43) Veröffentlichungstag der Anmeldung:
**01.07.87 Patentblatt 87/27**

(45) Bekanntmachung des Hinweises auf die
Patenterteilung:
**10.10.90 Patentblatt 90/41**

(84) Benannte Vertragsstaaten:
**AT BE CH DE ES FR GB GR IT LI LU NL SE**

(56) Entgegenhaltungen:
**EP-A-0 060 473
CH-A- 475 883
DE-B-2 255 026
GB-A-2 036 773
US-A-3 879 492
US-A-4 125 662
US-A-4 269 321**

(73) Patentinhaber: **Wolff Walsrode
Aktiengesellschaft
Postfach
D-3030 Walsrode 1 (DE)**

(72) Erfinder: **Hinrichsen, Thomas
Küstrinerstrasse 19
D-3036 Bomlitz (DE)**
Erfinder: **Preiss, Holger
Kettenburg 29
D-2722 Visselhövede (DE)**
Erfinder: **Witte, Harry
Hangweg 10
D-3036 Bomlitz (DE)**

(74) Vertreter: **Zobel, Manfred, Dr. et al
c/o BAYER AG Konzernverwaltung RP
Patentabteilung Bayerwerk
D-5090 Leverkusen (DE)**

Courier Press, Leamington Spa, England.

**Beschreibung**

Die vorliegende Erfindung betrifft leicht zu öffnende (peelbare) und sterilisierbare Packungen aus zwei durch Versiegeln in den Randbereichen miteinander verbundenen Mehrschichtfolien, einer sogenannten Ober- und Unterfolie.

Sterilisierbare Packungen aus Mehrschichtfolien sind bekannt. Zur Herstellung solcher Behälter werden aber Mehrschichtfolien eingesetzt, die zumindest identische Siegelschichten aufweisen, vorzugsweise Siegelschichten aus einem Copolymerisat aus Ethylen/Buten-1. Da das Öffnen solcher Packungen nur unter großem Kraftaufwand möglich ist, hat man auch schon versucht, Packungen herzustellen, die sterilisierbar sind und sich leichter öffnen lassen (DE-AS 22 55 026). Bei diesen Packungen muß aber beim Öffnen ein Teil der Siegelschicht im Bereich der Siegelnaht von der Basisschicht komplett ab- und herausgerissen werden, was noch immer einen erheblichen Kraftaufwand erfordert und vorzugsweise nur mit einer besonders gestalteten Aufreißlasche gelingt.

Es bestand daher ein Bedarf, sterilisierbare Verpackungsbehälter bereitzustellen, die sowohl die notwendige Feuchtsterilisation bei 121°C im Gegendruckautoklaven ohne Beeinträchtigung der Dichtigkeit überstehen als sich auch bei der späteren Entnahme des sterilisierten Inhalts noch leichter öffnen lassen.

Gegenstand der Erfindung sind daher leicht aufreißbare (peelbare) und sterilisierbare Packungen aus mindestens zwei durch Versiegeln in den Randbereichen miteinander verbundenen, gegebenenfalls gasdichten Mehrschichtfolien, die jeweils wenigstens eine Siegelschicht aufweisen, dadurch gekennzeichnet, daß die eine Siegelschicht im wesentlichen aus einem Copolymerisat aus Ethylen/Buten-1 und die andere im wesentlichen aus einem Polypropylen oder einem Copolmerisat aus Propylen/Ethylen besteht.

Die erfindungsgemäßen Packungen, vorzugsweise Verpackungsbehälter werden bevorzugt nach dem bekannten Tiefziehverfahren in Form eines Bechers oder einer Mulde hergestellt, wofür die sogenannte Unterfolie eingesetzt wird, und der Becher und die Mulde mit einem Deckel, hergestellt aus der sogenannten Oberfolie, verschlossen wird.

Die abziehbare Oberfolie weist vorzugsweise eine Aufreißlasche in beliebiger Form auf.

Soll die Packung gasdicht sein, so muß sowohl die sogenannte Oberfolie als auch die Unterfolie eine Gassperrschicht aufweisen. Zur Herstellung der Gassperrschichten eignen sich alle bekannten Materialien mit geringer Sauerstoffdurchlässigkeit, vorzugsweise über 90% verseifte Copolymerisate aus Ethylen/Vinylacetat, oder Mischungen solcher Copolymerisate mit Polyamiden oder aus Polyvinylidenchlorid oder Aluminium. Sollen die gasdichten Verpackungen eine ausreichende Transparenz aufweisen, so wird zur Herstellung der Gassperrschicht vorzugsweise eine Mischung aus einem über 90% verseiftem Copolymerisat

aus Ethylen/Vinylacetat und Polyamid im Mischungsverhältnis 35:65 - 65:35 (Gew.-%) verwendet.

Die Basisfolie, auf der die Siegelschicht aufgebracht wird, kann in der Ober- und Unterfolie identisch sein. So eignen sich zur Herstellung der Basisschicht alle thermoplastischen Materialien die noch eine ausreichende Festigkeit bei der Sterilisationstemperatur aufweisen. Vorzugsweise werden zur Herstellung der Basisschicht teilkristalline Polyamide, besonders bevorzugt PA-6, PA-6,6, PA-6,12, Polyester, Polyolefine, besonders bevorzugt Propylenpolymerisate, Zellglas oder Aluminium verwendet. Zellglas und Aluminium werden insbesondere für die Oberfläche verwendet.

Für die Herstellung der Siegelschichten einer der zum Einsatz kommenden Mehrschichtfolien werden Ethylen/Buten-1 Copolymere verwendet, die einen Ethylengehalt von 70 bis 95 Gew.-%, vorzugsweise von 80-85 Gew.-%, eine Dichte von 0,920 bis 0,938 g/cm³, vorzugsweise 0,932 bis 0,936 einen Schmelzindex von 0,5/10 min (190°C; 2,16 kp) und einen Schmelzbereich von 115 bis 135°C aufweisen. Die Schichtdicke liegt im Bereich von 25-100 µm, vorzugsweise 50-80 µm.

Zur Herstellung der leicht aufreißbaren Packung muß die Mehrschichtfolie, deren Siegelschicht im wesentlichen aus dem genannten Ethylen/Buten-1 Copolymeren besteht, mit einer Mehrschichtfolie kombiniert werden, deren Siegelschicht im wesentlichen aus einem Ethylen/Propylen Copolymeren oder einem Polypropylen besteht.

Es können alle bekannten Propylen/Ethylen-Copolymere, die zur Herstellung von Siegelschichten bereits verwendet werden, eingesetzt werden; vorzugsweise solche mit einem Ethylengehalt von höchstens 6 Gew.-%, vorzugsweise von 4 bis 6 Gew.-%, einer Dichte von 0,9 bis 0,905 g/cm³ und einem Schmelzindex von 5 bis 6 g/10 min (230°C; 2,16 kg). Die Schichtdicke sollte im Bereich von 25-100 µm, vorzugsweise 80 µm liegen.

Die bekannten Polypropylene, die bereits zur Herstellung von Siegelschichten verwendet werden, können als Siegelmaterial verwendet werden. Sie sollten eine Dichte von 0,905 bis 0,910 g/cm³, einen Schmelzindex von 1,5 bis 8,0 g/10 min (230°C; 2,16 kp), vorzugsweise von 2 bis 4 g/10 min und einem Schmelzbereich von 160 bis 165°C aufweisen. Die Dicke der Siegelschicht sollte im Bereich von 40 bis 2000 µm, vorzugsweise 100 bis 1000 µm liegen.

Besonders bevorzugt sind die erfindungsgemäßen Packungen aus einer Kombination folgender Mehrschichtfolien aufgebaut:

1. PA-6 als Basisschicht verseiftes Ethylen/Vinylacetatcopolymerisat als Gassperrschicht oder einer Mischung aus diesem Copolymerisat mit PA-6,12, gegebenenfalls einer PA-6 Zwischenschicht und einem Ethylen/Buten-1 Copolymeren (= E/B) als Siegelschicht und

2. PA-6 als Basisschicht verseiftes Ethylen/Vinylacetatcopolymerisat (EVOH) oder einer

Mischung aus diesem Copolymerisat mit PA-6,12, gegebenenfalls einer PA-6 Zwischenschicht und einem Polypropylen (= PP) oder einem Ethylen/Propylen-Copolymerisat (= E/P) als Siegelschicht oder einer Kombination aus

1. PA-6 als Basisschicht und einem Ethylen/Propylen-Copolymerisat oder Polypropylen als Siegelschicht und

2. PA-6 als Basisschicht und einem Ethylen/Buten-1 Copolymerisat als Siegelschicht.

Gegebenenfalls können zwischen den einzelnen Schichten der zum Einsatz kommenden Mehrschichtfolien noch bekannte, übliche Haftvermittlerschichten angebracht werden.

Die erfindungsgemäßen Packungen können auf bekannten Tiefziehautomaten geformt, befüllt und verschlossen werden. Dabei wird die auf eine Rolle gewickelte Unterfolie in eine Klammerkette übernommen und mit dieser durch die einzelnen Stationen der Verpackungsmaschine transportiert. Zunächst werden aus der flachen Folienbahn durch Negativ- oder Positiv-Verformung Becher oder Mulden thermisch tiefgezogen. Je nach Größe und Form können mehrere Mulden neben-und hintereinander in einem Arbeitsgang tiefgezogen werden. Das Befüllen der geformten Becher oder Mulden wird durch geeignete Füllautomaten vorgenommen.

Danach wird die ebenfalls auf eine Rolle gewickelte Oberfolie auf die gefüllten Mulden geführt und nach Evakuierung und evtl. Schutzbegasung der gefüllten Behältnisse durch ein permanent beheiztes Siegelwerkzeug mit der Unterfolie verbunden. Die noch in einem Band zusammenhängenden Verpackungsbehälter werden anschließend durch geeignete Trennvorrichtungen, vorzugsweise Stanzen, vereinzelt.

Im Anschluß an die Verpackung werden die gefüllten Packungen zur Haltbarmachung des packungsinhaltes im Gegendruckautoklaven sterilisiert bei max. 121°C und 2 h.

Trotz der ausreichenden Siegelnahtfestigkeit, die die erfindungsgemäßen Packungen selbst nach dem Sterilisieren aufweisen, lassen sich die Packungen problemlos ohne größeren Kraftaufwand vorzugsweise mit einer üblichen, den Dimensionen der Packung entsprechenden Aufreißlasche öffnen.

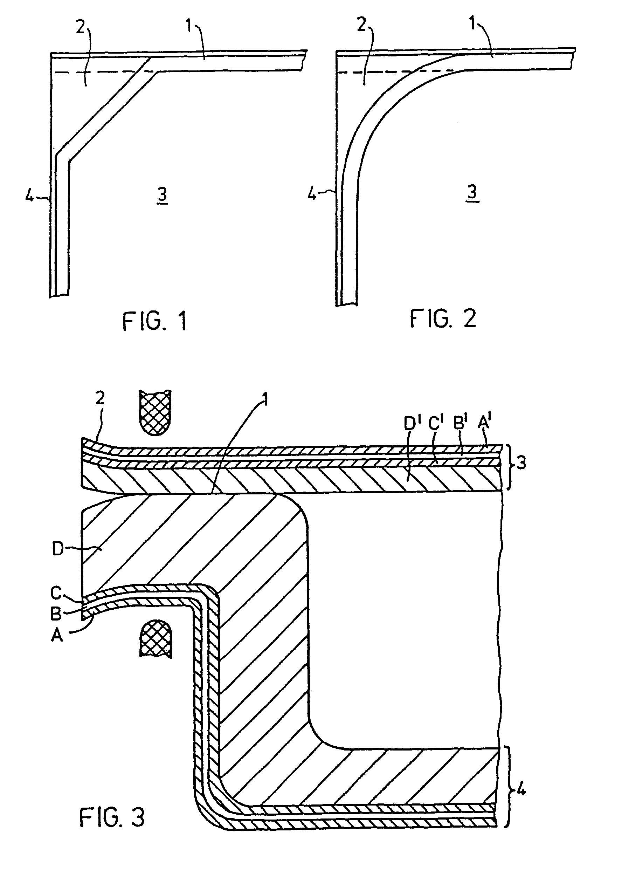

Fig. 1 und Fig. 2 zeigt eine Draufsicht auf solche mögliche Aufreißlaschen. In diesen Figuren ist die Siegelnaht (1) zu erkennen, die die Oberfolie (3) mit der Unterfolie (4) verbindet und die Aufreißlasche (2) mit deren Hilfe der Deckel (3) = Oberfolie (3) leicht von der Mulde oder dem Becher (4) = Unterfolie (4) abgezogen werden kann.

Beispiel 1

Aus einer Unterfolie mit dem Aufbau beginnend mit der Basisschicht bis zur Siegelschicht:

PA-6 35 µm (A)/EVOH-PA-6,12-Mischung 20 µm (B)/PA-6 35 µm (C)/PP 600 µm (D) und einer Oberfolie mit dem Aufbau beginnend mit der Basisschicht bis zur Siegelschicht:

PA-6 35 µm (A')/EVOH-PA-6,12-Mischung

20 µm (B')/PA-6 35 µm (C')/E/B-Copolymer 75 µm (D') werden auf einer Tiefziehmaschine Verpackungsbehälter geformt, die mit einem Fertiggericht befüllt, teilevakuiert und versiegelt werden. Die Nahtfestigkeit gemessen nach DIN 53 455 der fertigen Packungen wurde mit ca. 23 N/15 mm gemessen.

In Fig. 3 ist ein Querschnitt dieses erfindungsgemäßen Verpackungsbehälters dargestellt, wobei der Aufbau der Unterfolie (4) und Oberfolie (3) den obigen Angaben zu entnehmen ist. Im Bereich der Siegelnaht (1) ist die Unterfolie (4) mit der Oberfolie (3) allseitig verbunden, wobei die Oberfolie (3) mit Hilfe der Aufreißlasche (2) leicht von der Unterfolie (4) getrennt werden kann.

Anschließend werden diese Behältnisse im Autoklaven sterilisiert unter den Bedingungen: 121°C, 30 min, 2 bar Gegendruck. Nach dieser Behandlung beträgt die Nahtfestigkeit ca. 13 N/15 mm. Die Behälter sind dicht und gewähren damit einen optimalen Schutz des Inhalts trotz der guten Peelbarkeit der Deckelfolie.

Beispiel 2

Aus einer Unterfolie mit dem Aufbau PA-6 50 µm/E/B-Copolymer 75 µm wurden auf einer Tiefziehmaschine Verpackungsbehälter geformt, mit Infusionslösung im PVC-Beutel befüllt, mit einer Oberfolie mit dem Aufbau PA-6 30 µm/E/P-Copolymer 75 µm voll evakuiert und versiegelt.

Die Nahtfestigkeit der Siegelnähte beträgt ca. 6 N/15 mm, die nach der Sterilisation bei 115°C, 30 min, 1,5 bar Gegendruck ca. 4 N/15 mm abgefallen ist. Dieser Wert reicht jedoch aus, eine vollständig dichte Packung zu gewährleisten, da es sich hier um eine evakuierte Packung handelt. Durch die leichte Aufreißfestigkeit ist eine problemlose Entnahme des Packungsinhalts, z.B. im Operationsraum gewährleistet.

**Patentansprüche**

1. Leicht aufreißbare (peelbare) und sterilisierbare Packungen aus mindestens zwei durch Versiegeln in den Randbereichen miteinander verbundenen, gegebenenfalls gasdichten Mehrschichtfolien, die jeweils wenigstens eine Siegelschicht aufweisen, dadurch gekennzeichnet, daß die eine Siegelschicht im wesentlichen aus einem Copolymerisat aus Ethylen/Buten-1 und die andere im wesentlichen aus einem Polypropylen oder einem Copolymerisat aus Propylen/Ethylen besteht.

2. Packung nach Anspruch 1, dadurch gekennzeichnet, daß die Folien gasdicht sind.

3. Packungen nach Anspruch 1, dadurch gekennzeichnet, daß sie nach dem Tiefziehverfahren hergestellt wurden.

4. Packung nach wenigstens einem der vorhergehenden Ansprüche, dadurch gekennzeichnet, daß wenigstens eine Folie eine Aufreißlasche aufweist.

5. Packung nach wenigstens einem der vorhergehenden Ansprüche, dadurch gekennzeichnet, daß wenigstens eine Basisschicht der Mehrschichtfolien aus teilkristallinem Polyamid, Polyester, Polyolefin, Zellglas oder Aluminium besteht.

## Revendications

1. Emballages faciles à déchirer (pelables) et stérilisables, constitués d'au moins deux feuilles à plusieurs couches, le cas échéant étanches aux gaz, unies par scellement au niveau des zones marginales, présentant chacune au moins une couche de scellement, caractérisés en ce qu'une des couches de scellement est constituée essentiellement d'un copolymère d'éthylène/butène-1 et en ce que l'autre couche est composée en majeure partie d'un polypropylène ou d'un copolymère de propylène/éthylène.

2. Emballage selon la revendication 1, caractérisé en ce que les feuilles sont étanches aux gaz.

3. Emballages selon la revendication 1, caractérisés en ce qu'ils sont réalisés par le procédé d'emboutissage profond.

4. Emballage selon au moins l'une des revendications qui précèdent, caractérisé en ce qu'au moins une feuille présente une languette d'arrachement.

5. Emballage selon au moins l'une des revendications qui précèdent, caractérisé en ce qu'au moins une couche de base des feuilles à plusieurs couches est constituée de polyamide partiellement cristallin, de polyester, de polyoléfine, de verre cellulaire ou d'aluminium.

## Claims

1. A readily peelable, sterilizable pack of at least two optionally gas-tight multilayer films which are joined to one another at their edges by sealing and each of which comprises at least one sealing layer, characterized in that one of the sealing layers consists essentially of an ethylene/1-butene copolymer while the other consists essentially of a polypropylene or a propylene/ethylene copolymer.

2. A pack as claimed in claim 1, characterized in that the films are gas-tight.

3. Packs as claimed in claim 1, characterized in that they are produced by thermoforming.

4. A pack as claimed in at least one of the preceding claims, characterized in that at least one film comprises a tear-open tab.

5. A pack as claimed in at least one of the preceding claims, characterized in that at least one base layer of the multilayer films consists of partly crystalline polyamide, polyester, polyolefin, cellophane or aluminium.

FIG. 1

FIG. 2

FIG. 3